# EUROPEAN PATENT APPLICATION

(11) **EP 1 273 415 A2**
(43) Date of publication of application: **08.01.2003**
(21) Application number: 02254714.5
(22) Date of filing: 04.07.2002
(51) Int. Cl.: B29C 41/22, B29C 41/04, B29C 44/04, B29C 41/52, B29C 41/46, B29C 35/02, G09B 23/30

(54) **Moulded articles and methods of producing moulded articles**

(30) Priority: 07.07.2001 GB 0116639
(71) Applicant: Gordon Ellis & Co., Castle Donington, Derby DE74 2NP (GB)
(72) Inventor: Devereux, Mark, Castle Donington, Derby DE74 2NP (GB)
(74) Representative: Womsley, Nicholas

(57) **Abstract**

A moulded article (10) and method of producing same, comprising a first relatively high density outer layer (12) and a second relatively low density inner layer (14). A method comprises charging a mould with first and second moulding materials, heating the material to a first temperature at which the first material can be moulded, moulding said first material in the mould, further heating the material to a second temperature at which the second material can be moulded and moulding said second material in the mould.

## Description

The present invention relates to moulded articles and methods of producing moulded articles, and in particular but not exclusively to moulded articles in the shape of or resembling the human or animal body or parts thereof.

Models of human and animal bodies have many applications. For example, mannequins are used for the display of clothing, and models are used in the teaching and demonstration of science and medicine. Known models however suffer from the significant disadvantage in that they are hard and rigid. This gives the models an unnatural feel and look. Moreover it can present difficulties in that items cannot be easily attached to or displayed on such models.

According to the present invention there is provided a method of producing a moulded article, the method comprising charging a mould with first and second moulding materials, heating the materials to a first temperature at which the first material can be moulded, moulding said first material in the mould, further heating the material to a second temperature at which the second material can be moulded and moulding said second material in the mould.

Preferably the second material is moulded onto the first material whereby to preferably give the moulded article produced a two layer construction.

Preferably the first material is moulded to produce a relatively dense layer. The relatively dense layer may be relatively flexible, wherein the first material may comprise a plastomer, such as a polyethylene plastomer which may be a metallocene catalysed, fully formulated, UV stabilised rotormouldable plastomer. Alternatively the first material may be rigid or semi-rigid, and may comprise a medium density plastics material.

The second material may also comprise a plastomer, such as a polyethylene plastomer, preferably mixed with a blowing agent to give the second material relatively low density when moulded. The plastomer of the second material may comprise a metallocene catalysed, fully formulated, UV stabilised rotormouldable plastomer.

Preferably the first material is heated in the mould to a temperature within the range 280 to 320°C, and preferably moulded at such temperature for between six and nine minutes.

Preferably the second material is then heated in the mould to a temperature within the range 320 to 360°C, and preferably moulded at this temperature for between eight and twelve minutes.

Preferably the materials within the mould are cooled following moulding. The materials are preferably allowed to cool naturally, desirably in the mould, for between eight and ten minutes at approximately ambient temperature. The materials may be force cooled for example using means to blow air preferably over the mould and/or materials desirably before the moulded article has been removed from the mould. The material may be cooled using fans for between twenty and twenty five minutes, desirable following natural cooling.

The present invention may further provide a moulded article comprising a first relatively low density foamed inner layer and a second relatively dense outer layer.

Preferably the article is shaped to resemble a human or animal body or part thereof. Preferably the article has a feel the same or similar to the feel of the natural form of the body or part the article resembles. Preferably the article is resiliently flexible.

Preferably the inner layer is substantially thicker in cross section than the outer layer.

Preferably the layers are resilient, desirably so as to be able to receive attachment means such as pins, tacks or the like to enable items to be attached, desirably removably, to the article.

The outer layer may comprise a polyethylene plastomer. The inner layer may also comprise a polyethylene plastomer, preferably mixed with or, comprising blowing agent.

The outer layer preferably provides a substantially water resistant skin over the inner layer.

The article may be produced according to the method described in any of the paragraphs above.

The present invention also provides a further method of producing a moulded article, the method comprising moulding a first material in a mould to produce a relatively dense layer and then introducing and moulding a second material onto the first material.

The first and second material may be as described above.

Preferably the first material is moulded for approximately eight minutes at a temperature in the order of 365°C.

Preferably the second material is introduced to the mould, and moulded desirably at a temperature in the order of 365°C for approximately ten minutes.

Preferably the article is cooled before being removed from the mould, and is preferably allowed to cool naturally at approximately ambient temperature for at least eight minutes. The moulded article may then be force cooled, for example by blowing air thereover, for desirably approximately twenty minutes.

The invention may still further provide a method of moulding an article, the method comprising charging a mould with material substantially the same or similar to the second material described above and rotationally moulding same.

The material is preferably moulded substantially as described above in any of the preceding paragraphs.

Also provided according to the present invention is a moulded article produced in accordance with the method described in the preceding two paragraphs.

Preferred embodiments of the present invention will now be described by way of example only, with reference to the accompanying drawings in which:-
Fig. 1 is a perspective view of a moulded article according to the present invention;
Fig. 2 is a cross section of the article of Fig. 1 along the lines II; and
Fig. 3 is a cross section similar to the cross section of Fig. 2, of an alternative embodiment of the invention.

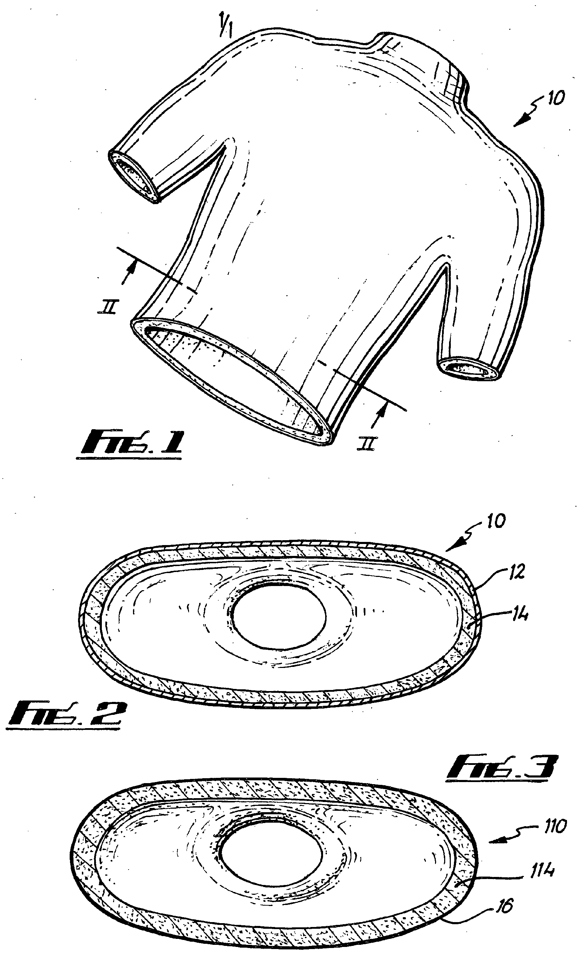

Referring to the drawings, and in particular Figs. 1 and 2, there is provided a moulded article 10 comprising a first relatively high density outer layer 12 and a second relatively low density inner layer 14. The material of the outer layer 12 comprises a polyethylene plastomer, such as a metallocene catalysed, UV stabilised rotormouldable plastomer like REVOLVE ™ N178 supplied by Matrix Polymers of Northampton. This material gives the layer 12 relatively flexible character. As an alternative the material may comprise a rigid or semi-rigid material, such as a medium density plastics material to give the article 10 a harder external surface.

The material of the inner layer 14 also comprises polyethylene plastomer, such as REVOLVE ™ M-644 supplied by Matrix Polymers. A blowing agent of any suitable type is provided to give the desired low density characteristics of the second material when moulded.

The article 10 is shown in the general shape of a human torso, and the density and consistency of the layers, 12, 14 are predetermined to give the torso a human-like feel to a person handling the article 10.

The inner layer 14 is considerably thicker in cross section than the outer layer 12, and the thickness of the layers 12, 14 can be determined according to the desired characteristics of the article 10. The layers 12, 14 are resilient and flexible.

The layers 12, 14 can also receive attachment means such as pins and tacks (not shown) to enable items to be selectively attached, desirably releasibly, to the article 10. This is particularly useful for example when the article 10 is a mannequin which is to be dressed with clothing. Pins and such like can be used to locate clothing securely in a desired position on the article 10.

The present invention also provides a method of producing a moulded article such as the article 10 by charging a mould with first and second moulding materials, heating the material to a first temperature at which the first material can be moulded, moulding said first material in the mould, further heating the material to a second temperature at which the second material can be moulded and then moulding said second material in the mould.

Charging a mould with both materials at once provides improved moulding efficiencies.

The first material is heated in the mould to a temperature within the range 280 to 320°C to melt and is rotationally moulded at such temperatures for between six and nine minutes.

The temperature within the mould is then increased to temperatures within the range 320 to 360°C to melt the second material. The second material is then moulded onto the first material at this temperature for between eight and twelve minutes.

Once these stages of moulding are complete, the mould and the moulded materials therein are allowed to cool naturally at approximately ambient temperature for between eight and ten minutes. It has been found that allowing natural cooling at this stage is important to produce an article 10 with the desired characteristics.

Forced cooling of the material within the mould is then carried out by blowing air over the mould and article using fans. Forced cooling in this way may be carried out for between twenty and twenty five minutes.

The invention also provides a further method of production of an article 10, the method comprising rotationally moulding the first material to produce the outer layer 12 and then introducing the material for the second layer 14 into the mould and moulding the second layer onto the first layer 12.

In this process, the outer material of the outer layer 12 is rotationally moulded within a mould for approximately eight minutes at a temperature in the order of 365°C.

The material of the inner layer 14 is then charged into the mould and rotationally moulded onto the outer layer 12 for approximately 10 minutes at a similar temperature.

Again an important stage is the cooling cycle which involves allowing the material within the mould to cool naturally at ambient temperature for at least eight minutes and then forced cooling using fan or similar means for a further twenty minutes or so before removing the moulded article 10 from the mould.

Referring to Fig. 3. this shows an article 110 according to an alternative embodiment of the present invention and produced according to a method according to a further embodiment of the present invention.

The article 110 comprises a single layer of relatively low density, foamed structure 114 similar to the layer 14 of the article 10.

The article 10 is produced by introducing material for the layer 114, which is essentially the same as the material described above for the layer 14, including the blowing agent, into a mould and rotationally moulding same at a temperature in the order of 365°C for approximately eight minutes.

The moulded article is then cooled substantially as described above.

The article 110 comprises a skin 16 on the outer surface thereof, which is formed during the moulding process generally during the collapse of the foam structure at the surfaces of the material in contact with the inside surface of the mould. The skin 16 has been found to provide an adequate surface layer for certain applications of the present invention, for example, for clothing mannequins where a more resilient outer skin is not necessary.

However, the article 10 may be more particularly applicable, for example in models where a more resilient outer layer may be required, for example in models used in the teaching of medicine and science. The outer layer 12 may enable the article 10 to be marked for example with marker pens, where which markings can be selectively removed for example with water or solvents.

The amount and nature of the materials are chosen for the layers 12, 14 to produce an article 10 of desired characteristics which is generally soft and pliable to the touch and resembles the feel of the torso of the human body.

It will be appreciated that the article can take the shape of the whole or part of any human or animal body, and the nature and consistency of the materials used can be varied to give the article the desired characteristics.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of producing a moulded article, **characterised in that** the method comprising charging a mould with first and second moulding materials, heating the materials to a first temperature at which the first material can be moulded, moulding said first material in the mould, further heating the material to a second temperature at which the second material can be moulded and moulding said second material in the mould.

2. A method as claimed in claim 1, **characterised in that** the second material is moulded onto the first material.

3. A method as claimed in claim 2, **characterised in that** the second material is moulded onto the first material to give the moulded article produced a two layer construction.

4. A method as claimed in any preceding claim, **characterised in that** the first material is moulded to produce a relatively dense layer (12).

5. A method as claimed in any preceding claim, **characterised in that** the first material is relatively flexible and comprises a plastomer, such as a polyethylene plastomer and/or a relatively rigid or semi-rigid material, such as a medium density plastics material.

6. A method as claimed in claim 5, **characterised in that** the material may be a metallocene catalysed, fully formulated, UV stabilised rotationally mouldable plastomer.

7. A method as claimed in any preceding claim, **characterised in that** the second material comprises a plastomer, such as a polyethylene plastomer.

8. A method as claimed in claim 7, **characterised in that** the second material is mixed with a blowing agent to give the second material relatively low density when moulded.

9. A method as claimed in claim 7 or claim 8, **characterised in that** the plastomer of the second material comprises a metallocene catalysed, fully formulated, UV stabilised rotationally mouldable plastomer.

10. A method as claimed in any preceding claim, **characterised in that** the first material is heated in the mould to a temperature within the range 280 to 320°C.

11. A method as claimed in any preceding claim, **characterised in that** the first material is moulded for between six and nine minutes.

12. A method as claimed in any preceding claim, **characterised in that** the second material is heated in the mould to a temperature within the range 320 to 360°C.

13. A method as claimed in any preceding claim, **characterised in that** the second material is moulded for between eight and twelve minutes.

14. A method as claimed in any preceding claim, **characterised in that** the materials within the mould are cooled following moulding.

15. A method as claimed in claim 14, **characterised in that** the materials are allowed to cool naturally for between eight and ten minutes at approximately ambient temperature.

16. A method as claimed in claim 14 or claim 15, **characterised in that** the materials are cooled in the mould.

17. A method as claimed in any of claims 14 to 16, **characterised in that** the materials are force cooled.

18. A method as claimed in claim 17, **characterised in that** air is blown over the mould and/or materials.

19. A method as claimed in claim 17 or claim 18, **characterised in that** the materials are force cooled before removal from the mould.

20. A method as claimed in any of claims 14 to 19, **characterised in that** the material is cooled using fans for between twenty and twenty five minutes.

21. A method as claimed in any of claims 14 to 20, **characterised in that** the materials are forced cooled following a period of natural cooling.

22. A moulded article (10) **characterised in that** the article comprises a first relatively low density foamed inner layer (14) and a second relatively dense outer layer (12).

23. A moulded article as claimed in claim 22, **characterised in that** the article (10) is shaped to resemble a human or animal body or part thereof.

24. A moulded article as claimed in claim 22 or claim 23, **characterised in that** the article (10) has a feel the same or similar to the feel of the natural form of the body or part the article resembles.

25. A moulded article as claimed in any of claims 22 to 24, **characterised in that** the article (10) is resiliently flexible.

26. A moulded article as claimed in any of claims 22 to 25, **characterised in that** the inner layer (14) is substantially thicker in cross section than the outer layer (12).

27. A moulded article as claimed in any of claims 22 to 27, **characterised in that** the layers (12, 14) are resilient so as to be able to receive attachment means such as pins, tacks or the like to enable items to be attached to the article.

28. A moulded article as claimed in any of claims 22 to 27, **characterised in that** the outer layer (12) comprises a polyethylene plastomer.

29. A moulded article as claimed in any of claims 22 to 28, **characterised in that** the inner layer (14) comprises a polyethylene plastomer.

30. A moulded article as claimed in claim 28 or claim 29, **characterised in that** the material is mixed with or comprises blowing agent.

31. A moulded article as claimed in any of claims 28 to 30, **characterised in that** the outer layer (12) provides a substantially water resistant skin over the inner layer.

32. A moulded article as claimed in any of claims 22 to 31, **characterised in that** the article (10) is produced according to the method described in any of claims 1 to 21.

33. A method of producing a moulded article, the method comprises moulding a first material in a mould to produce a relatively dense layer and then introducing and moulding a second material onto the first material.

34. A method as claimed in claim 33, **characterised in that** the first and second material are as defined in any of claims 1 to 32.

35. A method as claimed in claim 33 or claim 34, **characterised in that** the first material is moulded for approximately eight minutes at a temperature in the order of 365°C.

36. A method as claimed in any of claims 33 to 35, **characterised in that** the second material is introduced to the mould and moulded at a temperature in the order of 365°C for approximately ten minutes.

37. A method as claimed in any of claims 33 to 36, **characterised in that** the article is cooled before being removed from the mould.

38. A method as claimed in claim 37, **characterised in that** the article is allowed to cool naturally at approximately ambient temperature for at least eight minutes.

39. A method as claimed in any of claims 37 or 38, **characterised in that** the moulded article is force cooled.

40. A method as claimed in claim 39, **characterised in that** the moulded article is force cooled by blowing air thereover for approximately twenty minutes.

41. A method of moulding an article, the method comprises charging a mould with material substantially the same or similar to the second material defined in any preceding claim and rotationally moulding same.

42. A method as claimed in claim 41, **characterised in that** the material is moulded substantially as defined in any of claims 1 to 21 or 33 to 40.

43. A moulded article **characterised in that** the article is produced in accordance with the method described in claims 41 or 42.
